(19) Europäisches Patentamt
European Patent Office
Office européen des brevets

(11) Publication number: **0 122 688 B2**

(12) # NEW EUROPEAN PATENT SPECIFICATION

(45) Date of publication of the new patent specification: **02.08.95**

(51) Int. Cl.[6]: **C08G 69/26**

(21) Application number: **84300745.1**

(22) Date of filing: **07.02.84**

Divisional application 88108488 filed on 27.05.88.

The file contains technical information submitted after the application was filed and not included in this specification

(54) **Crystalline copolyamides from terephthalic acid, isophthalic acid and C6 diamines.**

(30) Priority: **16.02.83 US 466901**

(43) Date of publication of application: **24.10.84 Bulletin 84/43**

(45) Publication of the grant of the patent: **20.09.89 Bulletin 89/38**

(45) Mention of the opposition decision: **02.08.95 Bulletin 95/31**

(84) Designated Contracting States: **AT BE CH DE FR GB IT LI LU NL SE**

(56) References cited:
**DE-B- 1 805 921**
**FR-A- 2 371 474**
**GB-A- 1 382 551**
**US-A- 3 145 193**
**US-A- 3 150 117**
**US-A- 3 294 758**
**US-A- 3 646 156**
**US-A- 3 941 755**
**US-A- 4 218 509**

**POLYMER, Vol. 17, No. 10, 10, October 1976, pp. 875-892**

**Handbook of fillers and Reinforcements for Plastics, H. Katz et al., Van Nostrand Reinhold Co., 1978, p.43**

(73) Proprietor: **AMOCO CORPORATION**
**200 East Randolph Drive**
**Chicago**
**Illinois 60601 (US)**

(72) Inventor: **Poppe, Wassily**
**105 North Main Street**
**Lombard**
**Illinois 60148 (US)**
Inventor: **Chen, Yu-Tsai**
**22 W 401 McCarron Road**
**Glen Ellyn**
**Illinois 60137 (US)**
Inventor: **Paschke, Edward Ernest**
**25 W 681 Coventry Court**
**Wheaton**
**Illinois 60187 (US)**

(74) Representative: **Ritter, Stephen David et al**
**Mathys & Squire**
**100 Grays Inn Road**
**London WC1X 8AL (GB)**

**EP 0 122 688 B2**

## Description

Background of the Invention

Field of the Invention

The field of this invention relates to crystalline copolyamides obtained from mixtures of terephthalic acid (TA) and isophthalic acid (IA) and mixtures of hexamethylenediamine (HMDA) and trimethylhexamethylenediamine (TMHMDA).

Background

Crystalline copolyamides from TA, IA and mixtures of TMHMDA and HMDA are not known from the prior art. In fact, U.S. Patent 3,382,216 teaches that the preparation of polyhexamethylene terephthalamide cannot be effected through melt condensation processes. U.S. Patent 3,150,117 discloses that linear amorphous film forming polyamides can be prepared from dicarboxylic acids and hexamethylene diamine having alkyl substituents on the alkylene moiety. Trimethylhexamethylenediamine and hexamethylenediamine as such are not disclosed in this reference.

Other pertinent references include U.S Patent 3,294,758, which discloses amorphous polyamides, to prepare an amorphous fiber which can be crystallised after the drawn essentially amorphous fiber is heat treated at temperatures above glass transition temperatures. It further teaches that compositions containing greater than 30 percent hexamethylenediamine are brittle. U.S. Patents 3,825,516, 3,962,400, 3,941,755, 3,150,117, 3,627,736, 3,692,749, and 3,382,216 disclose amorphous polyamides.

Thus US—A—3,941,755 discloses copolymers of HMDA, TA and IA wherein the ratio of TA:IA is 60 to 80 mole percent. US—A—3,150,117 discloses copolymers of TA, IA and a diamine $H_2N—R—NH_2$ wherein R is an alkyl-substituted saturated hydrocarbon chain. Such copolymers are amorphous. US—A—4,218,509 discloses fiber forming polyamides containing at least 50 mole percent AA, 20—40 mole percent TA and 2—20 mole percent of a third component which can be IA. GB—A—1,382,551 is concerned with a fiber forming copolyamide with a TA content of 60 to 80 percent, while FR—A—2,371,474 concerns amorphous copolyamides of IA, HMDA and TMHMDA.

In reviewing all these references, it is clear that the crystalline polyphthalamides manufactured from mixtures of HMDA and TMHMDA wherein the TA content exceeds 80 percent of the acid moieties, including filled compositions of these polymers having heat deflection temperatures of 240 to 305°C, are unknown to the prior art.

The general object of this invention is to provide crystalline polyphthalamides and molding compositions reinforced with glass fibers, glass beads, minerals, graphite fibers or a mixture thereof. We have now found that crystalline polyphthalamides can be obtained from a mixture of TA and IA, TMHMDA and HMDA. The mole ratio of TA and IA can vary from 81/19 to 99/1, preferably about 85/15. The mole ratio of HMDA and TMHMDA can vary from 55/45 to 98/2, preferably 60/40 to 95/5. This crystalline polymer, when filled and molded with glass fibers, glass beads, minerals, graphite fibers, or a mixture thereof, has a heat deflection temperature in the range of 240 to 305°C, as determined by ASTM method, D648. This is an unusual feature and completely unexpected, since amorphous polyphthalamides have much lower heat deflection temperatures. The importance of having high heat deflection temperatures is that it enables the injected molded polyterephthalamides to be used in applications such as the hood of an automobile, shroud for a lawn mower, chain saw guard, and an electrical connector application. In addition to the high heat deflection temperature, the tensile strengths of these copolyamides usually are 20,000 to 40,000 psi (138—276 MPa) which is as high or higher than that of die cast aluminum or zinc, while the specific gravity is about one-half that of aluminum or zinc. Thus, these copolyamides are particularly useful for application in transportation equipment. The molecular weight of one polyamide copolymer preferably is 5,000 to 40,000.

Our novel compositions can be filled with 10 to 60 weight percent glass fibers, glass beads, minerals such as mineral fibers, graphite fibers or a mixture thereof. Advantageously, the molding composition may contain from 20 to 50 weight percent of glass fibers, glass beads, minerals, graphite fibers or a mixture thereof. Our studies have shown that high heat deflection temperatures of the molded copolyamide can be improved by substituting for part of the polymer, 10 to 60 weight percent thereof with glass fibers, glass beads, minerals, or graphite fibers. The polyamide copolymer costs are also reduced when glass fibers, beads, minerals or graphite fibers are substituted for part of the polyamide copolymer. These glass filled copolyamides are much more economical than molding compositions prepared without the use of the glass

fibers, glass beads, minerals, or graphite fiber fillers. Novel fibers and laminates can also be prepared from the copolyamides of the invention and this is indicated by the excellent physical properties of these copolyamides.

Our novel crystalline polyphthalamides are suitably extruded at a temperature of 300 to 360 °C through a fiber die having a multiplicity of apertures of 0.06 inch (1.5 mm) diameter each. Fiber strands are suitably taken up at 10 to 1200 meters per minute, preferably at 500 to 1000 meters per minute. The fibers are suitably taken up at a temperature of at least 290 °C, advantageously, in the range of 310 to 350 °C, preferably, in the temperature range of 320 to 340 °C to give fibers having a tenacity of about 6 grams per denier and an initial modulus of about 28 grams per denier. The use of polyamides as engineering plastics has been limited only by their relatively high cost. Thus, when our invention was employed, through which the inherent cost can be reduced, the commercial application of polyamides requiring very high heat deflection temperatures can be greatly expanded.

We have prepared monofilaments using our novel polyamides. With monofilament, the process starts with a single screw extruder to supply a melt for conversion to fiber. The die for monofilament is similar to the multifilament die. The monofilament process is a slower operation, typically 50 to 200 feet/minute (15—61 m/minute). For the melt spinning operations, 40 to 80 feet/minute (12—24 minute) was the speed used for the monofilament processing. The monofilament, on the other hand, is water quenched with much less melt draw down. The monofilament is subsequently drawn with heated drawing systems. The monofilament drawing is done in-line using heated ovens.

TABLE 1
Terpolyamide Monofilament

| Sample | Tm (C°) | Melt Temp (C°) | Denier (g/9000m) | Elongation (%) | Tenacity (g/d) | Initial Modulus (g/d) | Draw Ratio (X:1.0) |
|---|---|---|---|---|---|---|---|
| TA/IA HMDA/TMHMDA 85/15/−75/25 | 302 | 321 | 1360 | 11.7 | 5.0 | 61.8 | 4.2 |
| | | | 1630 | 9.6 | 4.7 | 59.1 | 4.6 |
| | | | 1850 | 17.0 | 4.4 | 53.0 | 5.1 |
| | | | 1820 | 29.3 | 3.3 | 45.1 | 3.1 |

Suitably, in our process for the manufacture of polyphthalamides, the reaction temperature is kept in the range of 260 to 315 °C, and TA and IA in the mole ratio of 81/19 to 99/1, preferably in the mole ratio of 81/19 to 90/10, are reacted in the presence of water. The mole ratio of HMDA and TMHMDA is kept at 55/45 to 98/2; preferred ranges are 55/45 to 80/20. In the preferred process, the reaction is conducted in a Helicone reactor, preheated to a temperature of 120 to 175 °C. In our process for the manufacture of polyamides, equal molar amounts of diamine are reacted with dicarboxylic acid. The molar ratio of diamine to the TA and IA mixture may be in the range of 1.2/1 to 1/1.2, preferably about 1/1.

Catalysts can suitably be employed in our process. These catalysts include the following compounds: $NaH_2PO_2$, $H_3PO_2$, $H_3PO_4$, $H_2SO_4$, HCl, $Na_3PO_3$, $NaH_2PO_4.H_2O$.

The amount of catalyst present can vary from 0.01 to 0.2 weight percent of the total weight of the reactants. The preferred catalyst is sodium hypophosphite.

The advantage of our process is that the water content of the salt solution may be less than 25 percent, preferably less than 17 percent. The water content usually is in the range of 5 to 17 percent by weight. The terephthalic acid moiety is in at least 81 percent of all the diacides used to prepare the polyamides. The diacid and diamine monomers are preferably charged in about equimolar ratios, a reasonable amount of excess of the diamine is tolerated, usually 1 to 10 percent. The reaction is preferably carried out at temperatures of 220 to 350 °C and a pressure of 100 to 550 psig (689—3791 kPa). The resulting salt can be used directly without separation in the condensation processes described herein or it can be recovered separately.

Our novel injection moldable crystalline polyamide copolymers of TA and IA comprise substantially the following recurring structural units:

A) 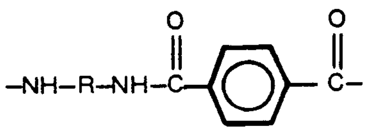 C) 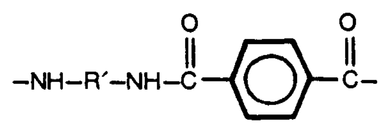

B) 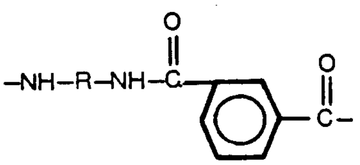 D) 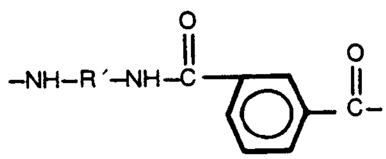

wherein R is a straight chain aliphatic hydrocarbon radical consisting of 6 carbon atoms and R' is an alkyl substituted saturated hydrocarbon chain, 6 carbon atoms in length, in which the alkyl substitution consists of three methyl groups, with two of the three methyl groups on the same carbon atom. The preferred diamines for our novel compositions are 2,2,4-trimethylhexamethylene diamine, 2,4,4-trimethylhexamethylene diamine or mixtures of these. Injection molding of our polyphthalamide, filled or unfilled, is accomplished by injecting the polyamide into a mold maintained at a temperature of 100 to 220 °C. In this process, a 20 second to 1 minute cycle is used with a barrel temperature of 300 to 350 °C. These temperatures will vary depending on the glass transition temperature (Tg) and melting temperature (Tm) of the polyamide copolymer being molded. The polyphthalamide has excellent thermal and mechanical properties and can readily be molded into useful products or formed into fibers, laminates or coatings. The physical properties of the claimed copolyamides are disclosed in Table 4.

We have found that the polyphthalamides of this invention are improved by the addition of reinforcing materials; particularly the thermal properties are improved if the polyterephthalamide contains from 10 to 60 percent by weight glass fibers, glass beads, minerals, graphite fibers or mixtures thereof. In the preferred range, the polyterephthalamides contain 20 to 50 percent by weight of the glass fibers, glass beads, minerals, graphite fiber, or mixtures thereof. Suitably, the reinforcing materials can be glass fibers, glass beads, glass spheres, or glass fabrics. The glass fibers are made of alkali-free, boron-silicate glass or alkali-containing C-glass. The thickness of the fibers is suitably on the average between 3 µm and 30 µm. It is possible to use both long fibers in each range of from 5 to 50 mm and also short fibers with each filament length of 0.05 to 5 mm. In principle, any standard commercial grade fibers, especially glass fibers, may be used. Glass beads ranging from 5 µm to 50 µm in diameter also may be used as a reinforcing material.

The reinforced polyamide polymers may be prepared in various ways. For example, so-called roving endless glass fiber strands are coated with the polyamide melt and subsequently granulated. The cut fibers or the glass beads may also be mixed with granulated polyamide and the resulting mixture melted in a conventional extruder, or alternatively the fibers may be directly introduced into the polyamide melt through a suitable inlet in the extruder. Injection molding of the novel glass filled polyamide is achieved by injecting the polyamide into a mold maintained at a temperature of 100 to 220 °C. In this process, a 30 second cycle is used with a barrel temperature of 300 to 360 °C. The injection molded conditions are given in Table 2.

TABLE 2

| | |
|---|---|
| Mold Temperature | 100 to 220 °C |
| Injection Pressure | 7,000 to 16,000 psi (48 to 110 MPa) and held for 10 to 40 seconds |
| Back Pressure | 100 to 1,000 psi (689 kPa to 6.89 MPa) |
| Cycle Time | 20 to 60 seconds |
| Extruder: Nozzle Temperature | 330 to 360 °C |
| Barrels: Front heated to | 320 to 350 °C |
| Screw: | 20 to 60 revolutions/minute |

The following examples illustrate the preferred embodiment of this invention. It will be understood that the examples are for illustrative purposes only and do not purport to be wholly definitive with respect to the conditions or scope of the invention.

Examples

GENERAL PROCEDURE

The salt is prepared as follows: diacid and diamine monomers are charged to a batch reactor, which has a pitched blade turbine and is of suitable temperature and pressure ratings, to provide a homogeneous salt solution. This is typically 425 to 450 °F (218—232 °C) and 450 to 550 psig (3—3.8 MPa). Additional components including water, catalyst, silicone oil end capping agent, and plasticizer are also introduced in the salt reactor. Water content of the salt can range up to 25% by weight. The preferred range is 13 to 17% by weight.

The salt is metered through a pump and pressure is increased to 1500—5000 psig (10—34 MPa). The resulting prepolymer then passes through a preheat zone where temperature is raised from 425 to 450 °F (218—232 °C), 550 to 625 °F (288—329 °C). The total residence time here is 25 to 50 seconds. The resulting prepolymer is then flashed through a control valve to give an aerosol mist at pressure of 0—400 psig (0—2.7 MPa) and the polymer is then passed through a tubular flash reactor. This reactor is designed to provide a high heat flux to the polymer and has a wall temperature of 650 to 1000 °F (343—538 °C) melt temperature range of 500 to 750 °F (260—399 °C) through the flash reactor. The total residence time in the reactor is 0.1 to 20 seconds based on feed rate and pressure. (The inherent viscosity (I.V.) is measured in 60/40 phenol tetrachloroethane at 30 °C.)

Conveniently, the polymer is injected directly on the screws of the twin-screw reactor denoted as ZSK in Table 3 to further increase the molecular weight. The copolyamide was prepared as described in the General Procedure with specific details hereinbelow:

TABLE 3

| | |
|---|---|
| Monomers: | 82% hexamethylene diammonium terephthalate<br>14% hexamethylene diammonium isophthalate<br>3% trimethylhexamethylene diammonium terephthalate<br>1% trimethylhexamethylene diammonium isophthalate |
| Water Content:<br>Specific Mass Flow: | 17% (by weight)<br>149 lb/hr-in$^2$ (429 kg/hr-cm$^2$) |
| Residence Time: | Salt Reactor 100 minutes<br>Preheat zone 40 seconds<br>Reactor zone 2 seconds (est.) |
| Reactor Wall Temp.:<br>Melt Temp.:<br>Salt Feed Temp.:<br>Product I.V.: | 760 ° F (404 ° C) Pressure: 100 psig (689 kPa)<br>570 ° F to 650 ° F (299—343 ° C)<br>580 ° F (304 ° C)<br>(Phenol/TCE) Tube: 0.20 dl/g ZSK: 1.00 dl/g |

TABLE 4
Properties of 85/15—96/4
TA/IA-HMDA/TMHMDA Polyamide

| Sample Code | Glass Fiber % | Tensile | | Flexural | | HDT (at 264 psi—1.8 MPa) °C |
|---|---|---|---|---|---|---|
| | | Strength psi (KPa) | Elongation % | Strength M Psi (MPa) | Modulus MM psi (GPa) | |
| 994Q | 0 | 14.6 (100) | 5.2 | 17.2 (119) | 0.51 (3.5) | |
| 994B | 45 | 36/3 (250) | 4.5 | 53.3 (367) | 2.02 (13.9) | >304 |
| 85/15 | 45 | 37.0 (255) | 4.1 | 48.4 (334) | 1.91 (13.2) | >304 |

The tradenames "Helicone", "Irganox" and "Nylon" used herein are Registered Trade Marks.

## Claims

**1.** A crystalline polyamide copolymer of terephthalic acid and isophthalic acid and aliphatic diamines, said copolymer comprising substantially the following recurring structural units:

A) 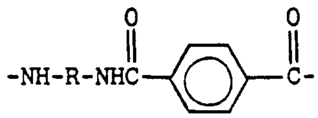 and B) 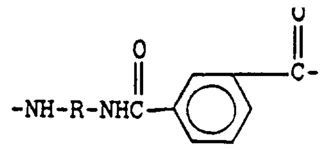

wherein the mole ratio of Units A to Units B is between 81/19 to 99/1 and the R groups in said copolymer are a mixture of a straight chain aliphatic hydrocarbon radical consisting of 6 carbon atoms and a radical consisting of an alkyl substituted saturated hydrocarbon chain, 6 carbon atoms in length, in which the alkyl substitution consists of 3 methyl groups with two of the three methyl groups on the same carbon atom, wherein the mole ratio of the straight chain hydrocarbon to the alkyl substituted hydrocarbon is 55/45 to 98/2.

**2.** A copolymer as claimed in Claim 1 wherein the ratio of the straight chain hydrocarbon to the alkyl substituted hydrocarbon is 55 to 45 to 80 to 20.

**3.** A copolymer as claimed in Claim 1 or Claim 2 wherein the alkyl substituted hydrocarbon radical is 2,2,4-trimethylhexamethylene, 2,4,4-trimethylhexamethylene or a mixture of both.

**4.** An injection molding composition comprising a polyamide copolymer as claimed in any preceding claim and 10 to 60 per cent of glass fibers, glass beads, minerals, graphite fibers or mixtures of these.

**5.** A composition according to Claim 5 comprising 20 to 50 percent of glass fibers, glass beads, minerals, graphite fibers or mixtures of these.

**6.** A composition according to Claim 4 or Claim 5 in the form of a molded object.

**Patentansprüche**

**1.** Kristallines Polyamidcopolymerisat aus Terephthalsäure und Isophthalsäure und aliphatischen Diaminen, **dadurch gekennzeichnet, daß** diese Copolymerisat die folgenden wiederkehrenden Stuktureinheiten aufweist:

A) 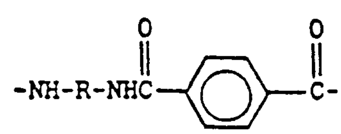

und

B) 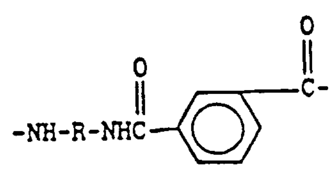

worin das Molverhältnis der Einheiten A zu den Einheiten B zwischen 81:19 bis 99:1 liegt und die Gruppen R in diesem Copolymerisat ein Gemisch aus einem geradkettigen aliphatischen Kohlenwasserstoffrest mit 6 Kohlenstoffatomen und einem aus einer alkylsubstituierten gesättigten Kohlenwasserstoffkette mit einer Länge von 6 Kohlenstoffatomen bestehenden Rest darstellen, in welchem die Alkylsubstitution aus drei Methylgruppen besteht, wobei sich zwei dieser drei Methylgruppen am gleichen Kohlenstoffatom befinden, worin das Molverhältnis aus dem geradkettigen Kohlenwasserstoff und dem alkylsubstituierten Kohlenwasserstoff von 55:45 bis 98:2 reicht.

**2.** Copolymerisat nach Anspruch 1, **dadurch gekennzeichnet, daß** das Molverhältnis aus dem geradkettigen Kohlenwasserstoff und dem alkylsubstituierten Kohlenwasserstoff von 55:45 bis 80:20 reicht.

**3.** Copolymerisat nach Anspruch 1 oder 2, **dadurch gekennzeichnet, daß** der alkylsubstituierte Kohlenwassersstoffrest 2,2,4-Trimethylhexamethylen, 2,4,4-Trimethylhexamethylen oder ein Gemisch aus beiden ist.

**4.** Spritzgießmasse, **dadurch gekennzeichnet, daß** sie ein Polyamidcopolymerisat nach irgendeinem der vorhergehenden Ansprüche und 10 bis 60 % Glasfasern, Glasperlen, Mineralien, Graphitfasern oder Mischungen hiervon enthält.

**5.** Masse nach Anspruch 4, **dadurch gekennzeichnet, daß** sie 20 bis 50 % Glasfasern, Glasperlen, Mineralien, Graphitfasern oder Mischungen hiervon enthält.

**6.** Copolymerisat nach Anspruch 4 oder 5 in Form eines geformten Gegenstands.

**Revendications**

**1.** Copolymère cristallin de type polyamide d'acide téréphtalique et d'acide isophtalique et de diamines aliphatiques, ledit copolymère comprenant essentiellement les motifs structuraux répétés suivants :

A) 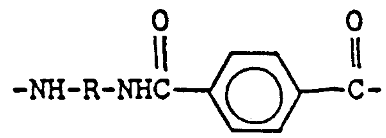

et

B) 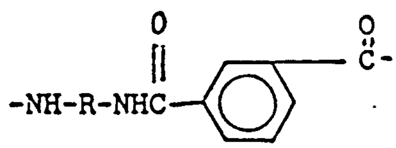

où le rapport molaire des motifs A aux motifs B est entre 81/19 et 99/1 et les groupes R dudit copolymère sont un mélange d'un radical hydrocarboné aliphatique à chaîne droite constitué de 6 atomes de carbone et d'un radical constitué d'une chaîne hydrocarbonée saturée longue de 6 atomes de carbone alcoyl-substituée, dans laquelle la substitution alcoyle est constituée de 3 groupes méthyles avec deux des trois groupes méthyles sur le même atome de carbone, où le rapport molaire de l'hydrocarbure à chaîne droite à l'hydrocarbure alcoyl-subsbtitué est de 55/45 à 98/2.

**2.** Copolymère selon la revendication 1, dans lequel le rapport de l'hydrocarbure à chaîne droite à l'hydrocarbure alcoyl-substitué est de 55/45 à 80/20.

**3.** Copolymère selon la revendication 1 ou la revendication 2, dans lequel le radical hydrocarboné alcoyl-substitué est un 2,2,4-triméthylhexaméthylène, un 2,4,4-triméthylhexaméthylène ou un mélange des deux.

**4.** Composition de moulage par injection comprenant un groupe polymère de type polyamide comme revendiqué dans l'une quelconque des revendications précédentes et 10 % à 60 % de fibres de verre, de perles de verre, de matières minérales, de fibres de graphite ou de leurs mélanges.

**5.** Composition selon la revendication 4 comprenant 20 % à 50 % de fibres de verre, de perles de verre, de matières minérales, de fibres de graphite ou de leurs mélanges.

**6.** Composition selon la revendication 4 ou la revendication 5 sous forme d'un objet moulé.